# EUROPÄISCHE PATENTANMELDUNG

(11) **EP 3 825 058 A1**
(43) Veröffentlichungstag der Anmeldung: **26.05.2021**
(21) Anmeldenummer: 19210905.6
(22) Anmeldetag: 22.11.2019
(51) Int. Cl.: B23Q 17/09, G05B 19/4065

(54) **WERKZEUGMASCHINE SOWIE VERFAHREN ZUM BETRIEB EINER WERKZEUGMASCHINE**

(71) Anmelder: Huber, Martin, 5452 Pfarrwerfen (AT); Wörmer, Alfons, 5500 Bischofshofen (AT)
(72) Erfinder: WÖRMER, Alfons, 5500 Bischofshofen (AT); HUBER, Martin, 5452 Pfarrwerfen (AT)
(74) Vertreter: Baronetzky, Klaus

(57) **Zusammenfassung**

Die Erfindung betrifft eine Werkzeugmaschine, insbesondere Drehschleifmaschine die mit einer Werkzeugspindel, mit einem Spindelmotor und einem in eine Spannzange eingespannten Werkzeug, mit welchem ein relativ zum Werkzeug mehrachsig verfahrbares Werkstück bearbeitbar ist, mit einer Steuervorrichtung für die Werkzeugspindel, die den Spindelmotor steuert. Eine mit der Steuervorrichtung (20) verbundene Spindellast-Erfassungsvorrichtung (24) ist vorgesehen und die Steuervorrichtung (20) vergleicht das Ausgangssignal (26) der Spindellast-Erfassungsvorrichtung (24) mit einem vorgegebenen Grenzwert (50) welcher Grenzwert (50) unterhalb, insbesondere mind. 20% unterhalb, der Bruchlast (54) des Werkzeugs (18) liegt. Die Steuervorrichtung (20) schaltet den Spindelmotor (14) ab, wenn Ausgangssignal (26) der Spindellast-Erfassungsvorrichtung (24) den Grenzwert (50) übersteigt.

## Beschreibung

Die Erfindung betrifft eine Werkzeugmaschine, gemäß dem Oberbegriff von Anspruch 1, sowie ein Verfahren zum Betrieb einer Werkzeugmaschine, gemäß dem Oberbegriff von Anspruch 15, insbesondere für den Dentalbereich.

Werkzeugmaschinen, aber auch Drehschleifmaschinen, sind seid langem bekannt.

Speziell bei Werkzeugmaschinen ist es bekannt, über eine Steuervorrichtung, die mit einem Spindelmotor verbunden ist, die Geschwindigkeit des Spindelmotors zu regeln. Hierzu wird typischerweise über einen Drehzahlgeber die Geschwindigkeit überwacht, beispielsweise über einen in der Steuervorrichtung ausgebildeten PID-Regler belastungsabhängig nachgeregelt.

Hierbei liegt der Regelung der Gedanke zu Grunde, dass Werkzeugmaschinen typischerweise mehrachsig ausgebildet sind, beispielsweise 5-achsig. Die Achsenverteilung lässt sich in weiten Bereichen vorgeben, von 5/0 über 2/3 bis 0/5, entsprechend der Verteilung der Bewegungsachsen zwischen Werkstücklagerung und Werkzeuglagerung.

Allen Antrieben für die Achsen ist gemeinsam, dass Schrittmotore eingesetzt werden, die den relativen Vorschub des Werkstücks zu dem Werkzeug bewerkstelligen. Der Vorschub muss nun zur Geschwindigkeit des Werkzeugs passen, so dass die vorstehend erwähnte Regelung geboten ist.

Es sind auch Kombinationsregelungen vorgeschlagen worden, bei denen auch der aufgenommene Motorstrom oder die Spanungsleistung der Fräsmaschine in die Regelung über den Encoder einfließt und beispielsweise durch Begrenzung der Motorleistung eine Überhitzung des Bearbeitungsbereichs verhindern soll.

Beim Drehschleifen, das eine Kombination zwischen Drehen, Fräsen und Schleifen darstellt, ist das Werkzeug in an sich bekannter Weise eingespannt und läuft in einem vergleichsweise kleinen Endradius aus. Dem Endradius benachbarte Bereiche - oder gegebenenfalls der Endradius selbst - werden zum Bearbeiten eingesetzt. Dies stellt eine gewisse Besonderheit gegenüber handelsüblichen Fräsern, aber auch Drehmeißeln dar, denn selbst bei Stirnfräsern ist die Belastung typischerweise über einen größeren Bereich verteilt, und das Fräswerkzeug hat ein Längen-/Durchmesserverhältnis von typischerweise deutlich weniger als 5 zu 1.

Demgegenüber kann bei Drehschleifwerkzeugen das Längen-/Durchmesserverhältnis - bezogen auf den Durchmesser der Spitze des Werkzeugs - durchaus auch 10 zu 1 betragen.

Aufgrund des geringen Durchmessers ist der erforderliche Drehmoment vergleichsweise klein, aber die Antriebsgeschwindigkeit des Spindelmotors recht hoch. Diese kann beispielsweise 40.000 U/min. betragen.

Bei derart hohen Antriebsgeschwindigkeiten und einem entsprechend ungünstigen Längen-/Durchmesserverhältnis sind auch Schwingungen zu berücksichtigen, die in das Werkzeug aufgrund der Bearbeitung eingeleitet werden und eine Zusatzbelastung für das Werkzeug darstellen, aber auch die Bearbeitung des Werkstücks beeinträchtigen.

Um die Schwingungen zu reduzieren, hat man die Drehzahl der Drehschleifmaschine versuchsweise reduziert oder gegebenenfalls sogar erhöht, was jedoch aus bestimmten Gründen ungünstig ist und zudem eine Änderung des Vortriebs in allen Akten nach sich zieht.

Entsprechende Schwingungen können auch aufgrund der Wechsellast, die in das Drehschleifwerkzeug eingeleitet werden, zur besonderen Belastung des Spannfutters des Spindelmotors, und sogar zum Bruch des Werkzeugs führen.

Demgegenüber liegt der Erfindung die Aufgabe zugrunde, bei einer Werkzeugmaschine, die bevorzugt als Drehschleifmaschine gemäß dem Oberbegriff von Anspruch 1 ausgebildet ist, eine Verbesserung des Betriebs dahingehend bereitzustellen, dass trotz guter Arbeitsleistung die Bearbeitungssicherheit nicht beeinträchtigt wird.

Diese Aufgabe wird erfindungsgemäß durch die Ansprüche 1 bzw. 15 gelöst. Vorteilhafte Weiterbildungen ergeben sich aus den Unteransprüchen.

Beim Bruch eines Drehschleifwerkzeugs wird typischerweise auch gleich das Werkstück zerstört, und gegebenenfalls sogar aufgrund der enormen Fliehkraft bei 40.000 U/min, auch umgebende Bereiche in Mitleidenschaft gezogen.

Erfindungsgemäß ist es vorgesehen, eine Spindellast-Erfassungsvorrichtung in die Drehschleifmaschine einzubauen. Diese erfasst die je aktuelle Spindellast. Wenn die Spindellast einen vorgegebenen Grenzwert übersteigt, wird die Drehschleifmaschine vorsorglich abgeschaltet. Überraschend lässt sich mit dieser vergleichsweise einfachen Maßnahme ein sicherer Betrieb ohne umher fliegende gebrochene Drehschleifwerkzeuge mit einer hohen Effizienz kombinieren. Das Werkzeug kann näher am Maximum betrieben werden, und wenn Schwingungen entstehen, steigt die Spindellast aufgrund der zusätzlichen Reibung an, so dass die Steuervorrichtung den Spindelmotor vorsorglich abschaltet.

Versuche haben ergeben, dass sich durch die erfindungsgemäßen Maßnahmen ein wesentlich längere Lebensdauer des Werkzeugs bei höherem Werkstück-Output realisieren lässt.

Erfindungsgemäß wird die Drehschleifmaschine permanent überwacht, indem die Steuervorrichtung eine Vielzahl von Malen pro Sekunde über die Spindellast-Erfassungsvorrichtung Messwerte abgreift. Die Spindellast-Erfassungsvorrichtung kann beispielsweise einen Stromaufnehmer aufweisen, der zum Beispiel jede Millisekunde den aktuellen Motorstrom des Spindelmotors erfasst. Aufgrund dieser hohen Erfassungsfrequenz ergibt sich die Möglichkeit, die Erfassung des Messwerts sogar häufiger als bei jeder Umdrehung des Spindelmotors vorzunehmen. Der Motorstrom wird insofern bei unterschiedlichen Drehwinkeln des Werkzeugs je punktuell erfasst.

In vorteilhafter Ausgestaltung ist es vorgesehen, einen Mittelwert über eine Mehrzahl von Messwerten zu bilden und diesen dann als Ausgangssignal der Steuervorrichtung zuzuleiten.

Alternativ können auch die Messwerte der Steuervorrichtung zugeleitet werden, die dann das Ausgangssignal der Erfassungsvorrichtung bilden, und die Steuervorrichtung ermittelt die Mittelwerte.

Bevorzugt ist der Messzyklus teilerfremd zur Umdrehung des Spindelmotors. Hierdurch ist sichergestellt, dass bei stets unterschiedlichen Drehwinkeln gemessen wird, so dass eine etwaige Unwucht des Werkzeugs, die sich dann in einem erhöhten punktuellen Motorstrom an der Stelle des Kontakts der Unwucht mit dem Werkstück niederschlägt, erfasst wird.

Mit einem entsprechend schnellen Rechner in der Steuervorrichtung kann unter paralleler Erfassung der Drehzahl des Spindelmotors auch auf die Winkelposition der Unwucht geschlossen werden.

Erfindungsgemäß wesentlich ist es, dass innerhalb eines zeitlich zentralen Bereiches des Bearbeitungsfortschritts permanent die Spindellast erfasst wird und beim Überschreiten eines vorgegebenen Grenzwertes, der deutlich, beispielsweise 20% oder auch 40% unterhalb der Bruchlast ist, ein Abbruch der Bearbeitung erfolgt.

In diesem Zustand ist das Werkstück noch nicht gebrochen, würde jedoch brechen, wenn die Bearbeitung ohne Abbruch fortgesetzt würde.

Die erfindungsgemäße Maßnahme hat den Vorteil, dass dann das Werkzeug kurzerhand durch ein neues ersetzt werden kann und die Bearbeitung fortgesetzt werden kann, ohne dass das Werkstück verworfen werden müsste.

Zwischen Werkstück und Werkzeug entsteht typischerweise eine hohe Spindellast.

Je nach Werkstück gilt dies auch für das Ende der Bearbeitung.

Wenn beispielsweise eine Frontzahnkrone dreh-geschliffen wird, entsteht gegen Ende der Bearbeitung beim Eintauchen des Drehschleifwerkzeug ein hoher Umschlingungswinkel, und eine entsprechend hohe Last.

Erfindungsgemäß bevorzugt ist es daher, die Überwachung lediglich zwischen 10% und 90% des Bearbeitungsfortschritts vorzunehmen.

Diese Werte können selbstverständlich an die einzelnen Werkstücke und die vorzunehmenden Bearbeitungen angepasst werden.

Wenn eine entsprechende Frontzahnkrone gefräst oder drehgeschliffen wird, wird typischerweise zunächst die Krone außen gefräst. Während dieses Bearbeitungsabschnitts ist die Spindellast vergleichsweise hoch. Die erfindungsgemäße Abschaltung bei Spindellast Überschreitung greift.

In einem zweiten Abschnitt wird die Frontzahnkrone innen gefräst bzw. drehgeschliffen. In diesem Zustand ist die Spindellast wesentlich geringer und knapp oberhalb einer Basislinie, die der Stromaufnahme bei Leerlauf entspricht.

In einem dritten Abschnitt wird schlichtgefräst. In diesem Abschnitt ist die Spindellast ebenfalls wesentlich geringer.

Es ist möglich, die erfindungsgemäße Spindellast-Erfassungsvorrichtung auch während des zweiten und dritten Abschnitts einzuschalten. Es ist auch möglich, den Grenzwert für diese Abschnitte zu reduzieren.

Die genannten Grenzwerte könne werkzeugabhängig eingestellt werden, wobei es möglich ist, das Werkzeug vorab zu codieren und beispielsweise durch optische Erfassung des Codes der Werkzeugmaschine mitzuteilen, welcher Grenzwert eingesetzt werden soll.

Erfindungsgemäß wird bei jeder Werkzeugmaschine zunächst die Basislinie der Stromaufnahme ermittelt. Der genannte Grenzwert ist dann die Differenz zwischen der Basislinie und dem Wert Bruchlast - 20% - oder was auch immer als Grenzwert genommen wird - denn diese Differenz entspricht der tatsächlichen Last.

In vorteilhafter Ausgestaltung der Erfindung ist es vorgesehen, den Vorschub der Achsen der Werkzeugmaschine in Abhängigkeit von der Last zu realisieren.

Auch hierzu lässt sich die erfindungsgemäße Spindellast-Erfassungsvorrichtung einsetzen. Es ist günstig, wenn bei einer geringen Last der Vorschub groß gewählt ist, und bei einer großen Last der Vorschub gering.

Die führt dazu, dass das Werkstück und des Werkzeug gleichmäßig erwärmt werden und keine Temperaturspitzen entstehen.

Eine solche dynamische Vorschubsteuerung ermöglicht es auch, die Schallemission der Werkzeugmaschine zu reduzieren, und auch den Bearbeitungszyklus zu verbessern.

Weitere Vorteile, Einzelheiten und Merkmale ergeben sich aus der nachfolgenden Beschreibung mehrerer Ausführungsbeispiele anhand der Zeichnung.

Es zeigen:
- Fig. 1: eine schematische Darstellung eines Teils einer erfindungsgemäßen Drehschleifmaschine als Werkzeugmaschine in einer Ausführungsform;
- Fig. 2: ein Diagramm zur Darstellung der Spindellast als Funktion des Spindelstroms, bezogen auf dem Bearbeitungsfortschritt;
- Fig. 3a - 3d: Diagramme für die Spindellast bei unterschiedlichen herzustellenden Werkstücken, nämlich einem Onlay in Fig. 3a, einen Inlay ist Fig. 3b, eine Seitenzahnkrone in Fig. 3c, und einem Veneer in Fig. 3d;
- Fig. 4: eine Darstellung eines Ausgangssignals der Spindellast-Erfassungsvorrichtung beim Drehschleifen einer anderen Frontzahnkrone; und
- Fig. 5: eine Darstellung eines Diagramms des Spindelstroms bei der Herstellung von Frontzahnkronen bei unterschiedlichen Werkzeugmaschinen.

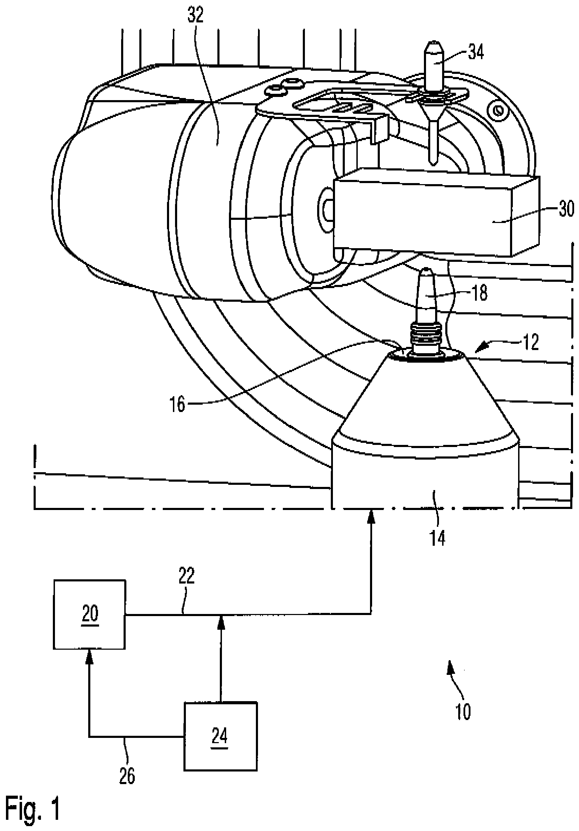

Aus Fig. 1 ist eine Drehschleifmaschine 10 als Werkzeugmaschine auszugsweise ersichtlich. Eine Werkzeugspindel 12 umfasst einen Spindelmotor 14 und ein in eine Spannzange 16 eingespanntes Werkzeug 18.

In der Werkzeugmaschine, dem Spindelmotor 14 benachbart, ist eine Steuervorrichtung 20 vorgesehen, die in Fig. 1 schematisch dargestellt ist.

Die Steuervorrichtung 20 steuert den Spindelmotor 14, so dass ein Spindelstrom 22 durch den Spindelmotor 14 fließt.

Der Spindelstrom 22 wird über eine Spindellast-Erfassungsvorrichtung 24 erfasst. Diese weist einen Ausgangsanschluss auf, über den ein Ausgangssignal 26 der Steuervorrichtung 20 zugeleitet wird.

In der Steuervorrichtung 20 ist ein vorgegebener Grenzwert 50 für die Spindellast, oder, entsprechend für den Spindelstrom 22, abgespeichert. Dieser vorgegebene Grenzwert 50 ist maschinenabhängig eingestellt und ist höher bei einem höheren Basisstrom oder Leerlaufstrom des Spindelmotors 14 und tiefer bei einem geringeren Basisstrom oder einem geringerem Leerlaufstrom.

Der Grenzwert 50 ist deutlich geringer als eine Bruchlast des Werkzeugs 18, und zwar im Beispielsfalle um durchschnittlich 25%.

Bei dieser Ausführungsform wird der Grenzwert 50 geändert und beträgt während der größten Zeit des Bearbeitungsfortschritts zwischen 10% und 80% der Bearbeitung, 30% unterhalb der Bruchlast des Werkzeugs 18, und, zwischen 80% und 90% des Bearbeitungsfortschritts, 20% unterhalb der Bruchlast.

Wie aus Fig. 1 ersichtlich ist, dient das Werkzeug 18 dazu, ein Werkstück 30 zu bearbeiten. Hierzu ist das Werkstück 30 in einem Roboterarm 32 eingespannt gehalten. Der Roboterarm 32 ist 5-achsig verfahrbar und trägt auch ein Reserve-Werkstück 34.

In dem dargestellten Ausführungsbeispiel ist die Werkzeugspindel 12 ortsfest, so dass der Vorschub vollständig über den Roboterarm 32 geleistet wird. Es versteht sich, dass auch eine andere Achsaufteilung anstelle von 5/0 möglich ist, beispielsweise 3/2. Auch soll die Erfindung nicht auf das Drehschleifen beschränkt sein, äquivalente Verfahren können ebenso eingesetzt werden.

Wie aus Fig. 1 ersichtlich ist, ist das Werkzeug 18 mit einer etwas anderen Form als das Werkzeug 34 versehen. Die Bruchlast des Werkzeugs 18 ist größer als die Bruchlast des Werkzeug 34.

Dies wird durch Einstellung des vorgegebenen Grenzwertes 50 zurück in der Steuervorrichtung 20 beim Wechsel des Werkzeugs 18 berücksichtigt.

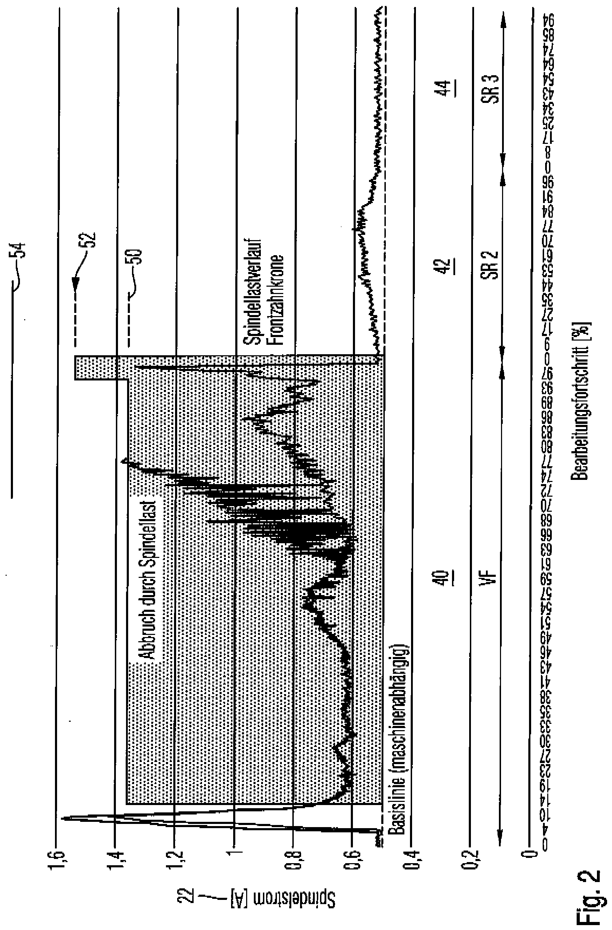

Aus Fig. 2 ist ersichtlich, wie sich der Spindelstrom 22 während eines Bearbeitungsfortschritts entwickelt. Die Bearbeitung erfolgt in drei Schritten beim Fräsen der Frontzahnkrone.

Im ersten Abschnitt 40 wird die Krone vorgefräst oder schruppgefräst.

Im zweiten Abschnitt 42 wird die Krone innen gefräst, mit einem deutlich geringerem Spindelstrom 22.

Im dritten Abschnitt 44 erfolgt das Schlichtfräsen; in diesem Abschnitt ist der Spindelstrom 22 noch geringer.

Jeder Abschnitt ist in einen prozentualen Bearbeitungsfortschritt zwischen 0% und 100% eingeteilt.

Wie ersichtlich ist, hat der Spindelstrom 22 eine maschinenabhängige Basislinie von etwa 500 mAh.

Dieser Spindelstrom 22 besteht während der Annäherung des Werkstücks 30 an das Werkzeug 18. Bei etwa 4% des Bearbeitungsfortschritts des Abschnitts 40 erfolgt der Erstkontakt zwischen Werkstück 30 und Werkzeug 18. Der Spindelstrom 22 steigt erheblich, und zwar auf etwa 1,4 Ampere.

Bis zum Bearbeitungsfortschritt 12% ist der Spindelstrom 22 auf Werte um 0,6 Ampere gesunken, und beim Schruppfräsen steigt er allmählich etwas an.

In Fig. 2 sind zwei Kurven dargestellt, eine ist mit "Abbruch durch Spindellast" bezeichnet, und die mit "Spindellastverlauf Frontzahnkrone".

Bei der erstgenannten Kurve steigt bei etwa 60% des Bearbeitungsfortschritts in Abschnitt 40 der Spindelstrom 22 deutlich an. Er steigt über 1,3 Ampere an und übersteigt dann einen Grenzwert 50, der Im Beispielsfall auf 1,36 Ampere festgesetzt wurde. Sobald dieser Grenzwert 50 erreicht ist, wird der Fräsvorgang abgebrochen und es wird ein Signal abgegeben, das darauf hinweist, dass das Werkzeug 18 ausgetauscht werden muss.

In diesem Zustand ist das Werkzeug 18 jedoch noch nicht gebrochen, dementsprechend ist das Werkstück 30 auch noch nicht beschädigt worden.

Auch wenn dies hier nicht dargestellt ist, kann der Bearbeitungsfortschritt fortgeführt werden, beim Abbruch bei etwa 75% des Bearbeitungsfortschritts in Abschnitt 40.

Gegen Ende des Abschnitts 40 steigt der Spindelstrom 22 erneut deutlich an, auf eine Wert knapp unterhalb des Grenzwertes 50. Dies hängt mit der Zunahme des Umschlingungswinkel des Werkstücks 30 zusammen. In dem dargestellten Ausführungsbeispiel wird bei etwa 95% des Bearbeitungsfortschritts der Grenzwert 50 auf einen Grenzwert 52 erhöht. Die Spindellast beleibt unterhalb dieses Grenzwertes 52.

Auch dieser Grenzwert 52 ist deutlich unterhalb einer Bruchlast 54.

Anschließend an den Abschnitt 40 erfolgt ein weiterer Fräsabschnitt 42 unter Verwendung eines geringeren Vorschubs. Dementsprechend ist der Spindelstrom 22 deutlich geringer und übersteigt 0,6 Ampere nicht.

Anschließend in dem Abschnitt 44 erfolgt ein reines Schlichtfräsen, so dass der Spindelstrom 22 sogar unter 0,55 Ampere verbeibt.

Ein besonderer Vorteil der Erfindung liegt darin, dass durch die Spindelstrom/BruchlastÜberwachung verhindert wird, dass das Werkstück 30 durch den Bruch des Werkzeugs 18 zerstört wird.

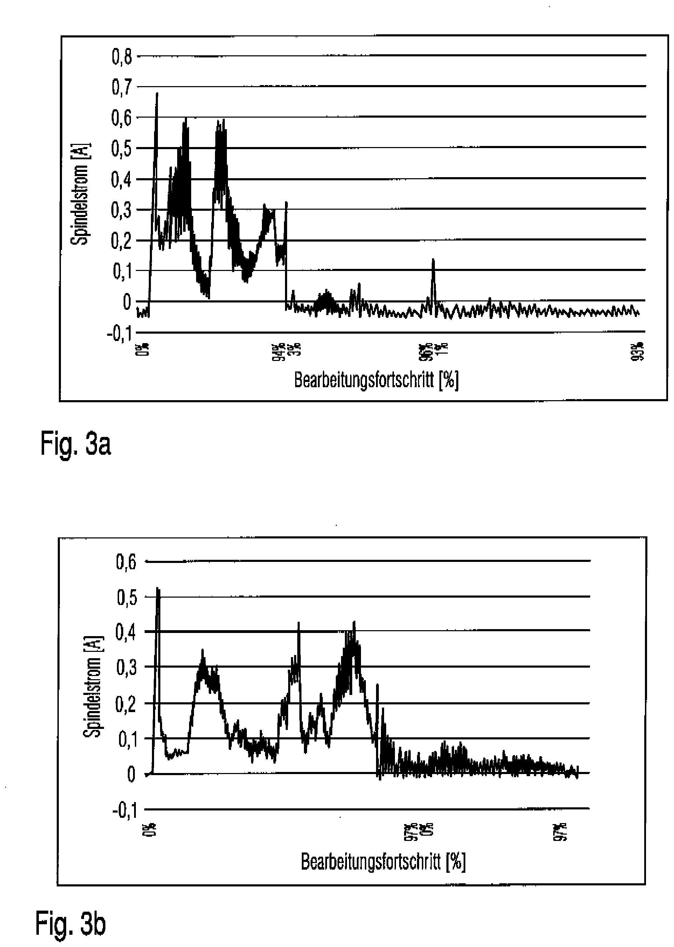

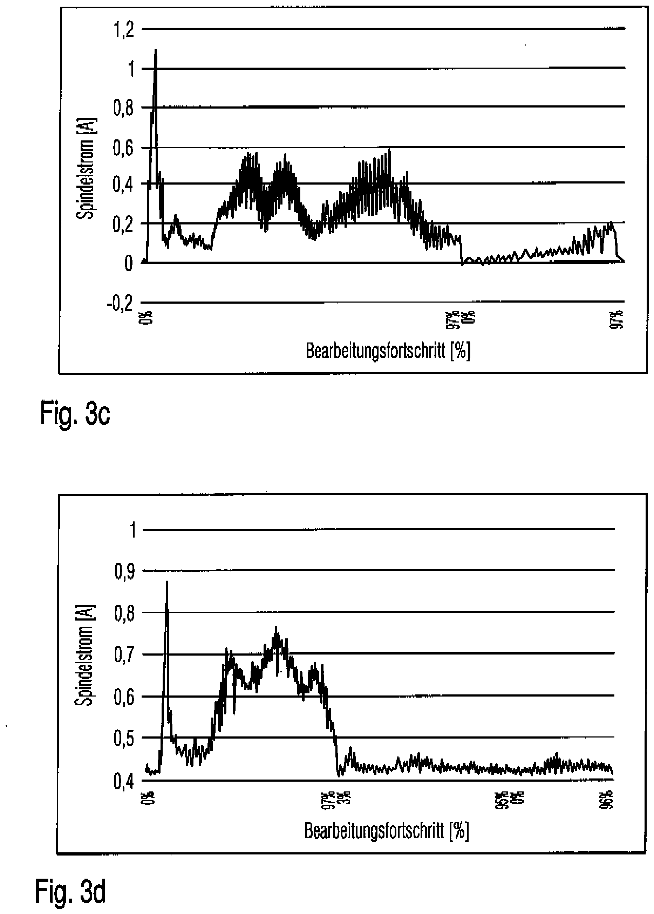

Zur Verdeutlichung, dass unterschiedliche Fräsaufgaben unterschiedliche Spindelströme und dementsprechend unterschiedliche Grenzwerte bedingen, sind in den Fig. 3a - 3b andere zu fertigende Dentalrestaurationsteile dargestellt. Fig. 3a zeigt den Spindelstrom 22 bei einem Onlay, Fig. 3b bei einem Inlay, Fig. 3c bei einer Seitenzahnkrone und Fig. 3d bei einem Veneer.

Es ist möglich, unterschiedliche Dentalrestaurationen zu screenen, also die Entwicklung des Spindelstroms 22 zu erfassen und den Grenzwert je in Abhängigkeit von einem typischen Verlauf bei dem entsprechenden Dentalrestaurationsteil einzusetzen.

Zudem ist der Spindelstrom 22 abhängig von dem Material des Dentalrestaurationsteil, aber natürlich auch abhängig von dem je verwendeten Werkzeug 18.

Durch entsprechende Codierung sowohl des Werkstücks 30 als auch des Werkzeugs 18 kann der je zu erwartende Spindelstrom 22 vorab bestimmt werden und der Grenzwert 44 entsprechend eingestellt werden, wobei es wie ausgeführt auch möglich ist, den Genzwert 44 dynamisch anzupassen.

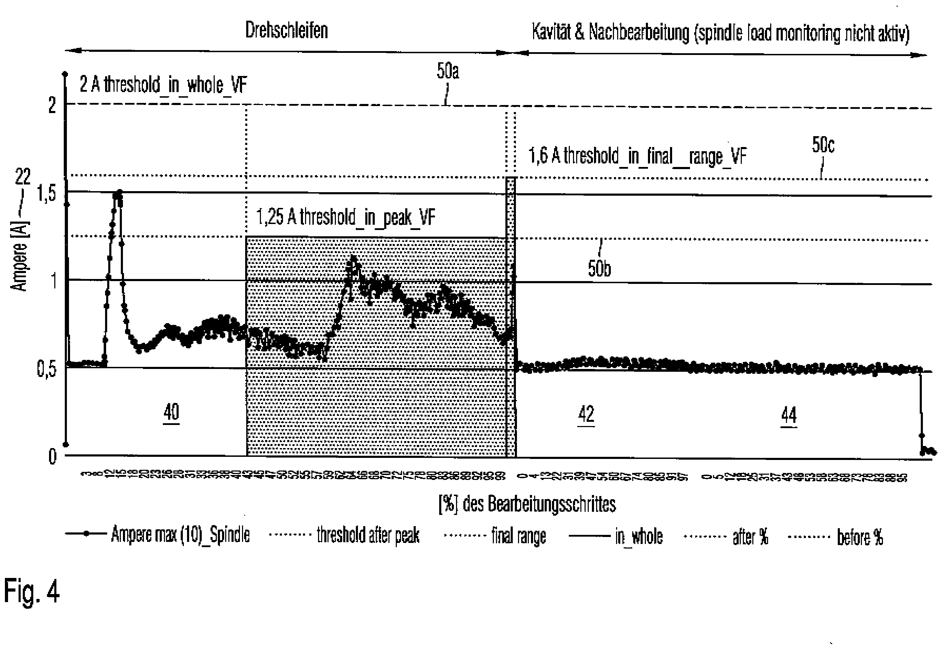

Eine weitere Ausführungsform eines erfindungsgemäßen Diagramms unter Darstellung des Spindelstroms 22 ist aus Fig. 4 ersichtlich.

Die Steuerung gemäß Fig. 4 zeichnet sich durch eine Änderung der Grenzwerte aus. Wie in der Ausführungsform gemäß Fig. 2 beträgt die Basislinie oder der Leerlaufstrom etwas über 0,5 Ampere. Im Abschnitt 40 erfolgt das Grobfräsen oder Grobdrehschleifen. In Abschnitt 40 ist die Spindellastüberwachung aktiv, in den Abschnitten 42 und 44 hingegen nicht. In diesen Abschnitten werden eine Kavität gefräst, im Abschnitt 42 wird die Nachbearbeitung vorgenommen, und im Abschnitt 44 schlichtfräsen.

Der Grenzwert 50a des Spindelstroms 22, der nicht überschritten werden darf und im gesamten Abschnitt 40 gilt, beträgt 2 Ampere. Dieser gilt zwischen 0 und 100% des Bearbeitungsfortschritt des Abschnitts 40.

Der Annäherung des Werkstücks 30 an das Werkzeug 18 erfolgt bei etwa 10% und führt zu einer Spindellast von etwa 1,5 Ampere. Dieser Wert liegt unterhalb des maximalen Grenzwerts 50a des Abschnitts 40.

Ab 40% des Bearbeitungsfortschritts des Abschnitts 40 wird ein tieferer Grenzwert 50b eingeschaltet, mit 1,25 Ampere. Dieser wird bei 62% des Bearbeitungsfortschritts knapp nicht erreicht, der dort bestehende Maximalwert beträgt 1,15 Ampere.

Gegen Ende des Abschnitts 40 wird der Grenzwert erhöht auf einen Grenzwert 50c, der 1,6 Ampere beträgt. Dieser Grenzwert 50c wird bei 96% des Bearbeitungsfortschritts eingeschaltet und gilt bis 100%, also bis zum Ende des Abschnitts 40.

Hieran schließend wird die Bruchlastüberwachung abgeschaltet.

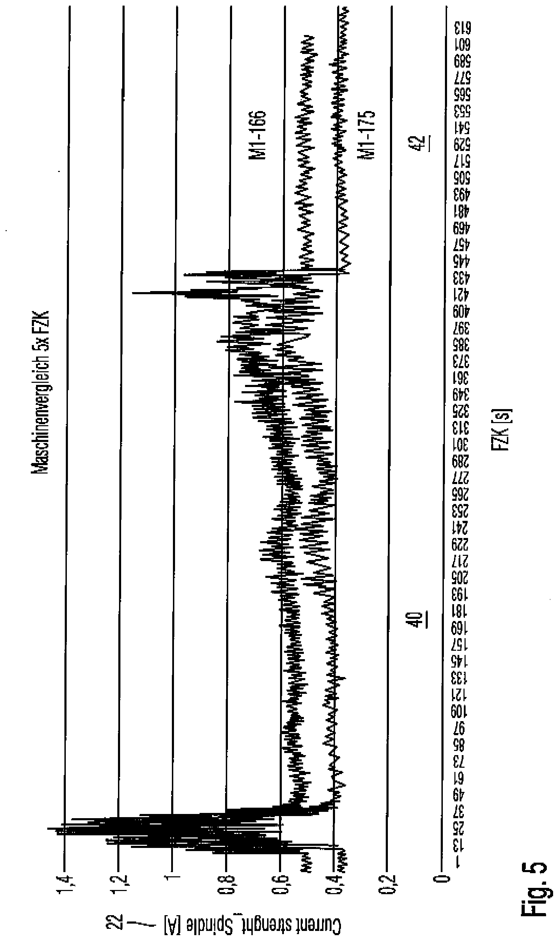

Fig. 5 zeigt, in welcher Weise sich die Spindelströme 22 bei unterschiedlichen Werkzeugmaschinen unterscheiden. Die mit M1-166 bezeichnete Werkzeugmaschine hat einen Leerlaufstrom von etwa 0,5 Ampere, während der Leerlaufstrom der mit M1-175 bezeichneten Werkzeugmaschine etwa 0,38 Ampere beträgt und damit deutlich geringer ist.

Beim Drehschleifen oder Fräsen des gleichen Werkstücks 30 ist die Spindellastkurve der Werkzeugmaschine M1-166 je deutlich höher als diejenige der Werkzeugmaschine M1-175, so dass auch der Grenzwert entsprechend anzupassen ist.

Die Spindellastkurven wurden durch Fräsen von je 5 Frontzahnkronen erstellt, wobei die Einzelkurven je überlagert sind, so dass sich eine etwas unscharfe Gesamtkurve ergibt, die jedoch den Unterschied zwischen den Werkzeugmaschinen deutlich macht.

## Patentansprüche

1. Werkzeugmaschine, insbesondere Drehschleifmaschine, mit einer Werkzeugspindel mit einem Spindelmotor und einem in eine Spannzange eingespannten Werkzeug, mit welchem ein relativ zum Werkzeug mehrachsig verfahrbares Werkstück bearbeitbar ist, mit einer Steuervorrichtung für die Werkzeugspindel, die den Spindelmotor steuert, **dadurch gekennzeichnet, dass** eine mit der Steuervorrichtung (20) verbundene Spindellast-Erfassungsvorrichtung (24) vorgesehen ist, und dass die Steuervorrichtung (20) das Ausgangssignal (26) der Spindellast-Erfassungsvorrichtung (24) mit einem vorgegebenen Grenzwert (50) vergleicht, welcher Grenzwert (50) unterhalb, insbesondere mind. 20% unterhalb, der Bruchlast (54) des Werkzeugs (18) liegt, und dass die Steuervorrichtung (20) den Spindelmotor (14) abschaltet, wenn Ausgangssignal (26) der Spindellast-Erfassungsvorrichtung (24) den Grenzwert (50) übersteigt.

2. Werkzeugmaschine nach Anspruch 1, **dadurch gekennzeichnet, dass** die Spindellast-Erfassungsvorrichtung (24) einen Stromsensor für die Erfassung von Strom durch den Spindelmotor (14) aufweist und dass der Stromsensor an die Steuervorrichtung (20) angeschlossen ist.

3. Werkzeugmaschine nach einem der vorherigen Ansprüche, **dadurch gekennzeichnet, dass** die Steuervorrichtung (20) eine Abschalteinrichtung aufweist, die basierend auf dem Ausgangssignal (26) der Spindellast-Erfassungsvorrichtung (24) arbeitet und anschließend an den Beginn einer Werkstück-Bearbeitung eingeschaltet und insbesondere vor dem Ende der Werkstückbearbeitung ausgeschaltet wird.

4. Werkzeugmaschine nach einem der vorherigen Ansprüche, **dadurch gekennzeichnet, dass** die Steuervorrichtung (20) die Drehzahl des Spindelmotors (14) während der Bearbeitung konstant hält.

5. Werkzeugmaschine nach einem der vorherigen Ansprüche, **dadurch gekennzeichnet, dass** der Grenzwert (50) mindestens 20%, bevorzugt mindestens 50% oberhalb der Spindellast bei der Normalbearbeitung, also der Bearbeitung des Werkstücks (18) beim Drehschleifen oder Fräsen eines Werkstücks (18), ist.

6. Werkzeugmaschine nach einem der vorherigen Ansprüche, **dadurch gekennzeichnet, dass** die Steuervorrichtung (20) die Weiterleitung des Ausgangssignals (26) der Spindellast-Erfassungsvorrichtung (24) beim Beginn und beim Ende der Bearbeitung unterbindet, insbesondere für die ersten 10 % der Bearbeitungszeit, und insbesondere für die letzten 10 % der Bearbeitungszeit.

7. Werkzeugmaschine nach einem der vorherigen Ansprüche, **dadurch gekennzeichnet, dass** die Spindellast-Erfassungsvorrichtung (24) vor der Bearbeitung ein Ausgangssignal (26) abgibt und dass die Steuervorrichtung (20) die Größe dieses Ausgangssignals (26) als Grundlast-Ausgangssignal interpretiert und dass der Vergleich mit dem Grenzwert (50) auf der Differenz zwischen dem Grundlast-Ausgangssignal und dem je aktuellen Ausgangssignal (26) basiert.

8. Werkzeugmaschine nach einem der vorherigen Ansprüche, **dadurch gekennzeichnet, dass** die Erfassungsvorrichtung den Strom durch den Spindelmotor (14) mehr als 100 mal pro Sekunde, insbesondere mehr als 500 mal pro Sekunde und besonders bevorzugt zwischen 750 und 2000 mal pro Sekunde erfasst und Messwerte abgibt und dass die Steuervorrichtung (20) eine Mehrzahl von Messwerten des Ausgangssignals (26) interpoliert, um das Ausgangssignal (26) zu erhalten.

9. Werkzeugmaschine nach Anspruch 8, **dadurch gekennzeichnet, dass** die Anzahl der für eine Interpolation verwendeten Messwerte des Ausgangssignals (26) mehr als 20, bevorzugt mehr als 100 und bevorzugt zwischen 200 und 300 ist.

10. Werkzeugmaschine nach einem der vorherigen Ansprüche, **dadurch gekennzeichnet, dass** die Steuervorrichtung (20) ein gemessenes Grundlast-Ausgangssignal abspeichert und nach mehreren Bearbeitungszyklen das aktuelle Grundlast-Ausgangssignal mit dem abgespeicherten Grundlast-Ausgangssignal vergleicht und bei einer Differenz, die höher ist als ein vorgegebener Grundlast-Grenzwert, beispielsweise 5 %, einen Lagerschaden der Werkzeugmaschine anzeigt.

11. Werkzeugmaschine nach einem der vorherigen Ansprüche, **dadurch gekennzeichnet, dass** die Werkzeugmaschine eine Vorschubsteuerung aufweist und den Vorschub in Schritten pro Zeiteinheit mehrachsig steuert und dass die Steuervorrichtung (20) bei einem vergleichsweise hohem Ausgangssignal (26) den Vorschub reduziert und bei einem vergleichsweise geringen Ausgangssignal (26) den Vorschub erhöht.

12. Werkzeugmaschine nach einem der vorherigen Ansprüche, **dadurch gekennzeichnet, dass** die Höhe des Ausgangssignals (26) der Spindellast-Erfassungsvorrichtung (24) von der Steuervorrichtung (20) erfasst wird und zusätzlich die Geschwindigkeit der Änderung des Ausgangssignals (26).

13. Werkzeugmaschine nach einem der vorherigen Ansprüche, **dadurch gekennzeichnet, dass** der Grenzwert (50) werkstückabhängig geändert wird und bei engen zu bearbeiteten bzw. zu erzeugenden Innenecken erhöht wird.

14. Werkzeugmaschine nach einem der vorherigen Ansprüche, **dadurch gekennzeichnet, dass** die Steuervorrichtung (20) den Grenzwert (50) während der Bearbeitung erhöht, insbesondere während eines zweiten Teils der Bearbeitung, um 20 - 30 % gegenüber dem Grenzwert (50) während des erstens Teils der Bearbeitung.

15. Verfahren zum Betrieb einer Werkzeugmaschine, insbesondere Drehschleifmaschine, mit einer Werkzeugspindel und einem Spindelmotor sowie einem in eine Spannzange eingespannten Werkzeug, welches Werkzeug ein Werkstück bearbeitet, das relativ zum Werkstück mehrachsig verfahren wird, mit einer Steuervorrichtung für die Werkzeugspindel, die den Spindelmotor steuert, **dadurch gekennzeichnet, dass** mit der Steuervorrichtung (20) eine Spindellast-Erfassungsvorrichtung (24) verbunden ist und dass die Steuervorrichtung (20) das Ausgangssignal (26) der Spindellast-Erfassungsvorrichtung (24) mit einem vorgegebenen Grenzwert (50) vergleicht, welcher Grenzwert (50) unterhalb, insbesondere mindestens 20 % unterhalb, der Bruchlast (54) des Werkzeugs (18) liegt, und dass die Steuervorrichtung (20) den Spindelmotor (14) abschaltet, wenn das Ausgangssignal (26) der Spindellast-Erfassungsvorrichtung (24) den Grenzwert (50) übersteigt.
